# EUROPEAN PATENT SPECIFICATION

(11) **EP 0 313 345 B1**
(45) Date of publication and mention of the grant of the patent: **12.01.1994**
(21) Application number: 88309839.4
(22) Date of filing: 20.10.1988
(51) Int. Cl.: B62M 9/10

(54) **Multistage sprocket assembly for a bicycle**
Zusammenbau eines mehrstufigen Kettenrades für ein Fahrrad
Ensemble de jeu de pignons à chaîne pour bicyclette

(30) Priority: 21.10.1987 JP 161539/87; 04.06.1988 JP 74583/88
(43) Date of publication of application: 26.04.1989
(73) Proprietor: SHIMANO INDUSTRIAL COMPANY LIMITED, Osaka (JP)
(72) Inventor: Nagano, Masashi, Izumi-shi Osaka (JP)
(74) Representative: Jones, Andrée Zena

(56) References cited:
- FR-A- 2 469 624
- GB-A- 2 005 363
- GB-A- 2 005 778
- US-A- 4 268 259

## Description

The present invention relates to a multistage sprocket assembly for a bicycle, and more particularly to a multistage sprocket assembly for a bicycle, which comprises at least one larger diameter sprocket and at least one smaller diameter sprocket and is mounted on a crank or a rear hub of the bicycle so as to shift a driving chain for changing the bicycle speed.

Conventionally, this kind of multistage sprocket assembly, as disclosed in the Japanese Utility Model Publication Gazette No. Sho 55-28,617 ( corresponding to the United States Patent No. 4,268,259 ), assembles a smaller diameter sprocket and a larger diameter sprocket in such a manner that the center between a pair of adjacent teeth at the larger diameter sprocket is positioned on the tangent extending from the center between a pair of adjacent teeth at the smaller diameter sprocket , a distance between the aforesaid centers is an integer multiple of chain pitch, and a first tooth of the larger diameter sprocket positioned behind the center between the adjacent teeth at the larger diameter sprocket in the rotation direction for driving the bicycle is made easily engageable with the driving chain, thereby improving a speed change efficiency when the driving chain is shifted from the smaller diameter sprocket to the larger diameter sprocket.

The driving chain comprises a large number of pairs of inner link plates, pairs of outer link plates and pins, connected in an endless manner. An interval between the opposite surfaces of each pair of inner link plates is smaller than that between the opposite surfaces of each pair of outer link plates. In other words, each pair of the outer link plates are positioned outside the inner link plates and form a space larger in width , while, each pair of the inner link plates are positioned inside the outer link plates and form a space smaller in width.

The driving chain constructed as above-mentioned is biased by a derailleur toward the larger diameter sprocket so as to be shifted thereto from the smaller diameter sprocket, at which time when the outer link plates at the chain correspond to the first tooth at the larger diameter sprocket, since the first tooth is the easy-engageable tooth and coincides with the chain pitch, the wider space between the outer link plates is at most fitted onto the first tooth, whereby the chain engages with the larger diameter sprocket. Even when the outer link plates corresponds to the first tooth as above-mentioned, since the end face of a link pin and the outer surface of the outer link plate interfere with the inside surface of the larger diameter sprocket facing to the smaller diameter sprocket side, so that the chain may not be further put toward the outside surface of the larger diameter sprocket, thereby not reliably engaging with the first tooth.

On the other hand, when the inner link plates correspond to the first tooth at the larger diamter sprocket, the outer link plate outside the inner link plate, in turn at the larger diameter sprocket side, interferes with the inside surface of the larger diameter sprocket , whereby the inner link plate insufficiently deviates toward the first tooth to result in that the space between the inner link plates is not engageable with the first tooth.

In this case, when a second tooth adjacent to the first tooth and behind in the driving rotation direction of the sprocket is made easily engageable like the first tooth, a space between the pair of outer link plates behind the inner link plates in the traveling direction thereof engages with the second tooth, but the inner link plates behind the aforesaid outer link plates may not engage with a third tooth adjacent to the second tooth and behind in the driving rotation direction, so that even when the space between the outer link plates well engages with the second tooth, the chain may ride on the third tooth while not engaging therewith, resulting in that the chain may disengage from the larger diameter sprocket.

Such problem can be solved by making the third tooth easily engageable like the first and second teeth. On the contrary , in a case where the outer link plates are biased in the position where they correspond to the first tooth, the next outer link plates corresponding to the third tooth may be caught thereby. In this case, the third tooth is not positioned corresponding to an integer multiple of chain pitch, thereby not smoothly engaging with the chain. Hence, the outer link plates caught by the third tooth may ride on the edge of tooth crest thereof and forcibly engage therewith, thereby creating the problem in that the speed change efficiency is deteriorated and also loud sounds are generated because the chain suddenly falls down onto the tooth bottom.

An object of the invention is to provide a multistage sprocket assembly for the bicycle which solves the aforesaid problems in the conventional example, in which the center between a pair of adjacent teeth at the smaller diameter sprocket and that between a pair of adjacent teeth at the larger diameter sprocket are positioned on the tangent extending along a moving path of the chain when shifted from the smaller diameter sprocket to the larger diameter one and a distance between the centers is an integer multiple of chain pitch, so that the chain is adapted to be always smoothly shifted from the former sprocket to the latter.

The invention provides a multistage sprocket assembly for a bicycle, comprising at least one larger diameter sprocket, at least one smaller diameter sprocket and a drive chain, the or each larger diameter sprocket having at its outer periphery a given number of teeth which are spaced at intervals corresponding to the pitch of the chain and the or each smaller diameter sprocket having at its outer periphery teeth which are smaller in number than the teeth of said larger diameter sprocket and are spaced at intervals corresponding to the pitch of the chain, said sprockets being assembled so that the centre 0₂ between a pair of adjacent teeth of said larger diameter sprocket is positioned on a tangent extending from the centre 0₁ between a pair of adjacent teeth of said smaller diameter sprocket, said tangent extending along the path of travel of the driving chain in engagement with said smaller diameter sprocket when said chain is shifted therefrom into engagement with said larger diameter sprocket, the distance between said centres 0₁, 0₂ being at least substantially an integer multiple of the chain pitch, characterised in that said larger diameter sprocket is provided with a chain guide surface on the inside surface of the sprocket facing the smaller diameter sprocket and at a position on said larger diameter sprocket which corresponds to the path of travel between said centres 0₁, 0₂ between adjacent teeth of the sprockets where the chain makes contact with the larger diameter sprocket, said chain guide surface having such a shape and size as to receive an entire link plate of a link of said chain and to cause the link to be biased towards the larger diameter sprocket as the chain leaves the smaller diameter sprocket and starts to engage with a tooth of the larger diameter sprocket, said tooth being the tooth behind said centre (0₂) between adjacent teeth of the larger diameter sprocket in the direction of drive rotation. In addition, in the present invention, the "distance equal to an integer multiple of chain pitch" includes the distance between the centres 0₁ and 0₂ equal to an integer multiple of chain pitch and also that somewhat slightly smaller than the chain pitch.

Accordingly, in the present invention , the chain, when shifted from the smaller diameter sprocket to the larger diameter sprocket, can reliably be biased at a predetermined amount toward the outside surface of the larger diameter sprocket along the chain guide portion provided at the inside surface of the larger diameter sprocket facing the smaller diameter sprocket. Hence, when the outer link plate of the chain corresponds to the first tooth positioned behind the center between a pair of adjacent teeth in the driving rotation direction, the space between the outer link plates can always reliably engage with the first tooth. Moreover, even when the inner link plate corresponds to the first tooth, a space between the outer link plates adjacent to and behind the inner link plates in the traveling direction thereof can reliably engage with the second tooth behind the first tooth in the driving rotation direction of the sprocket.

Also, when the outer link plates engage with the first tooth, the next outer link plates adjacent to the inner link plate behind the former outer link plates in the traveling direction thereof are prevented from riding on a third tooth behind the second tooth in the driving rotation directtion of the larger diameter sprocket.

In an example according to the present invention, at least two teeth including the first tooth behind the center between the adjacent teeth at the larger diameter sprocket in the driving rotation direction thereof are formed in speed change teeth engageable with the chain when shifted from the smaller diameter sprocket to the large diameter one, the residual teeth being formed in not-easy-engageable teeth, thereby enabling the chain to be shifted to the larger diameter sprocket always at the first tooth thereof in consideration of the relation with chain pitch. Accordingly, the chain is shifted without mistake and improves the speed change efficiency.

In said example, the first tooth, second tooth, and third tooth are formed in speed change teeth and all the residual teeth are not-easy-engageable with the chain. Furthermore, the first tooth is provided with a chain guide surface through which the chain, when shifted from the smaller diameter sprocket to the larger diameter one, can be guided reversely to the smaller diameter sprocket, that is, axially outwardly of the larger diameter sprocket, thereby displacing the second tooth axially outwardly of the larger diameter sprocket with respect to the first tooth and the third tooth similarly with respect to the second tooth.

Thus, the present invention can improve the speed change efficiency, prevent the outer link plate from being caught by the third tooth, and eliminate generation of sounds when the chain engages therewith.

The above and further objects and novel features of the invention will more fully appear from the following detailed description when read with reference to the accompanying drawings.

In the drawings:-
Fig.1 is a front view of a first embodiment of a multistage sprocket assembly of the invention,
Fig.2 is a partially omitted developed view when Fig.1 is viewed from below,
Fig.3 is a developed view corresponding to Fig.2, in which a driving chain is shifted at the position different from that in Fig.2 with respect to the sprockets,
Fig.4 is a front view of a larger diameter sprocket only,
Fig.5 is a sectional view taken on the line V-V in Fig.4,
Fig.6 is a sectional view taken on the line VI-VI in Fig.4,
Fig.7 is an illustration of another example of a not-easy-engageable tooth,
Fig.8 is a developed view of a second embodiment of the invention, corresponding to Fig.2, and
Fig.9 is a developed view of the same,corresponding to Fig.3.

A multistage sprocket assembly of the invention is mounted on a crank or a rear hub of the bicycle.

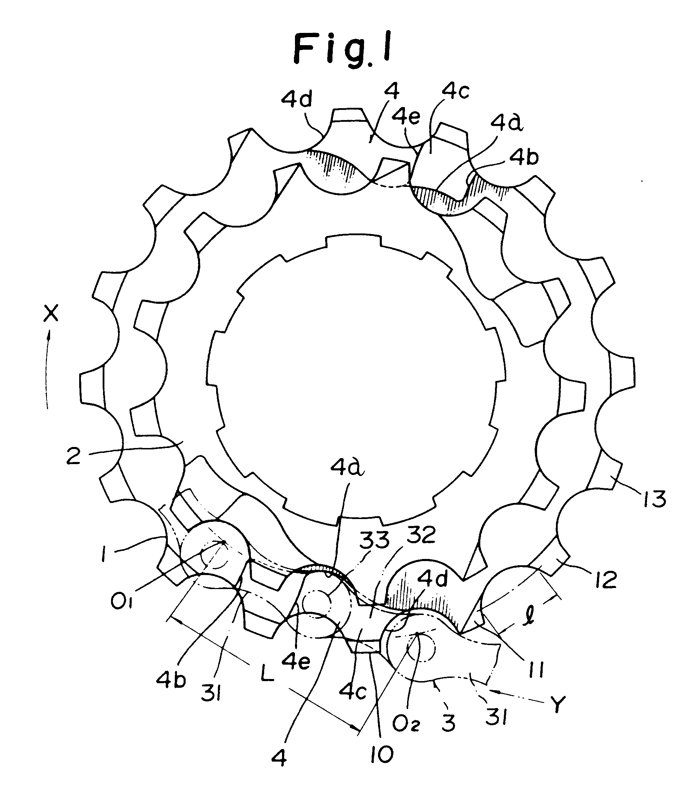

A first embodiment of the multistage sprocket assembly of the invention in Fig.1 is mounted on the rear hub of the bicycle, which includes a larger diameter sprocket 1 having 16 teeth at the outer periphery and a smaller diameter sprocket2 having 13 teeth at the outer periphery, the sprockets 1 and 2 being assembled to a driving member ( not shown ) and in relation of being spaced from each other at a predetermined interval, the driving member being rotatably supported to a driven member at the rear hub through a bearing.

Also, the sprockets 1 and 2 are assembled in the relation that the center 02 between a pair of adjacent teeth at the larger diameter sprocket 1 is positioned on a tangent extending from the center 01 between a pair of adjacent teeth at the smaller diameter sprocket 2. In addition, the tangent, as shown by the chain line in Fig.1, extends along a moving path of a driving chain 3 when shifted from the smaller diameter sprocket 2 in engagement therewith to the larger diameter sprocket 1.

A distance L between the centers 01 and 02 is equal to an integer multiple of chain pitch of the chain 3, and a chain guide portion 4 allowing the chain 3 to deviate toward the larger diameter sprocket 1 is recessed at the inside surface thereof facing the smaller diameter sprocket 2 and at the position corresponding to the traveling path of the chain 3 when traveling between the centers 01 and 02.

The chain guide portion 4 recessed on the inside surface of the sprocket 1 is preferable to be deep enough to prevent the inner link plate of the chain 3 at the larger diameter sprocket side from riding on a first tooth 11 at the larger diameter sprocket 1, the first tooth 11 being positioned behind the center 02 at the sprocket 1 in the driving rotation direction thereof.

At least two teeth including the aforesaid tooth 11 and a tooth 12 adjacent thereto and positioned rearwardly in the rotation direction of the sprocket 1 are formed in speed change teeth engageable with the chain 3 when shifted from the smaller diameter sprocket 2 to the larger diameter one 1. The residual teeth except for the teeth 11 and 12 are formed in not-easy-engageable teeth through which the chain 3 is not shiftable.

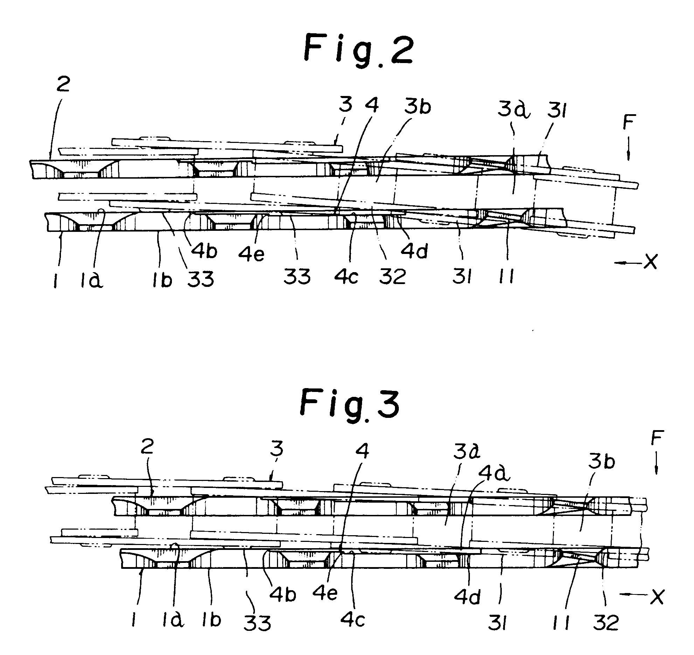

The chain guide portion 4 is made large enough to receive therein the link plates of the chain 3 positioned at the larger diameter sprocket side, so that the chain 3 can deviate at a predetermined amount toward the outside surface 1b of the larger diameter sprocket 1, thereby reliably engaging with the first tooth 11. The chain guide portion 4 recessed as above-mentioned, is preferable to be deep enough to engage a space 3a between the outer link plates 31 with the first tooth 11 when the outer link plates 31 corresponds to the first tooth 11 as shown in Fig.2 and to prevent the inner link plate 32 at the chain 3 from riding on the first tooth 11 when the inner link plate 32 corresponds to the first tooth 11 as shown in Fig.3. In brief, the chain 3 is preferred to be controlled of its movement with respect to the larger diameter sprocket 1.

The chain guide portion 4 may alternatively be formed of a cutout, but when it is recessed, the movement of the chain 3 can be controlled and a stepped portion 4a can receive the link plate of the chain 3 when shifted.

In the first embodiment in Fig.1 of the larger diameter sprocket 1 of 16 teeth and smaller diameter one 2 of 13 teeth, a distance L between the centers 01 and 02 is equal to two pitch of chain 3 as shown by the chain line in Fig.1.

Accordingly, the chain guide portion 4 at the inside surface 1a of larger diameter sprocket 1 is formed in the size from an initial end edge 4b to a termination 4d at the sprocket 1, the initial end edge 4b being somewhat apart from the position corresponding to the center 02 between the two adjacent teeth at the sprocket 2 toward the center 02 between two adjacent teeth at the sprocket 1, the termination 4d being the tooth bottom between the first tooth 11 and a tooth 10 positioned ahead of the center 02 in the driving rotation direction ( the direction of the arrow X ) of the sprocket 1.

In a case where the outer link plate 31 of the chain 3 corresponds to the first tooth 11 as shown in Figs.1 and 2, at the chain guide portion 4 are positioned the inner link plate 32 positioned ahead of the outer link plate 31 in the traveling direction ( in the direction of the arrow Y in Fig.1) of the chain 3, part of an outer link plate 31 positioned ahead of the inner link plate 32 in the traveling direction , and a link pin 33 for connecting the link plates 32 and 31, the link pin 33 abutting at its end face against the bottom 4c of recessed chain guide portion 4.

In a case where the inner link plate 32 corresponds to the first tooth 11 as shown in Fig.3, at the chain guide portion 4 are positioned the outer link plate 31 ahead of the inner link plate 32 in the traveling direction of chain 3, part of the inner link plate 32 positioned ahead of the outer link plate 31, and a link pin for connecting the link plates 31 and 32, the end face of the link pin and the outer link plate 31 abutting against the bottom of the recessed chain guide portion 4.

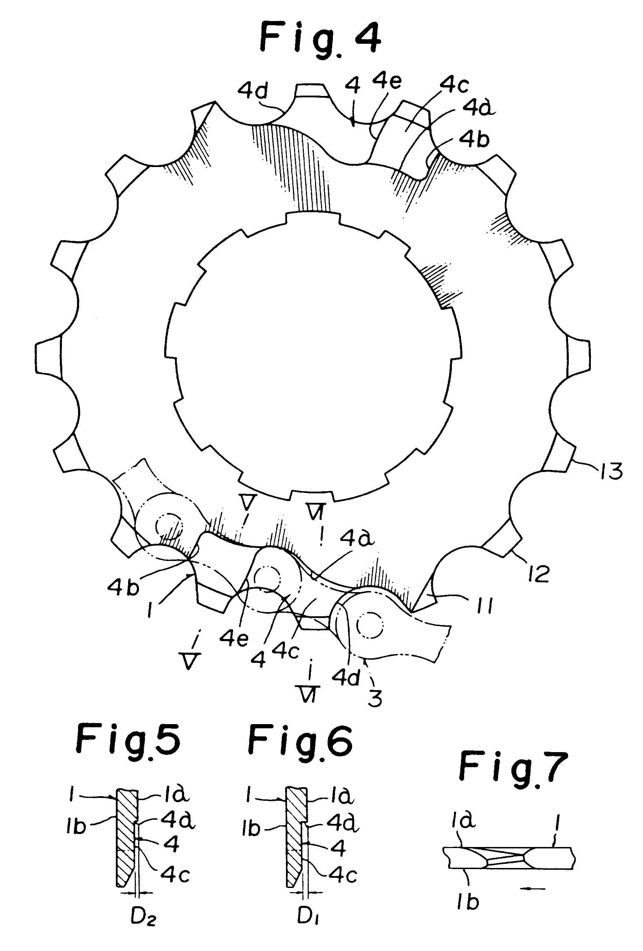

In the chain guide portion 4, a depth D1 (in Fig.6) in a range from an intermediate portion between the initial end 4b and the termination 4d to the termination 4d is made larger than that D2 (in Fig.5) in a range from the initial end edge 4b to the intermediate portion.

Also, in the first embodiment , a stepped portion 4e is provided at the intermediate portion of the guide portion 4 so as to stepwise change the depth thereof, but the chain guide portion 4 may alternatively be inclined throughout the entire length.

Since teeth facing the chain guide portion 4 each are reduced in thickness to an extent corresponding to the depth of the guide portion 4, it is preferable to make these teeth larger in circumferential width than other teeth as shown in Figs.1 and 4, thereby restricting lowering of strength.

All the teeth except for the first and second teeth 11 and 12 are made not-easy-engageable. The not-easy-engageable teeth, as shown in Figs.2 and 3, each are chamfered at the inner surface facing the smaller diameter sprocket 2, or, as shown in Fig.7, inclined forwardly in the driving rotation direction ( in the direction of the arrow X ) and reversely to the smaller diameter sprocket 2, that is, toward the outside surface of the larger diameter sprocket 1 with respect to the center line of thickness between the inside surface 1a and the outside surface 1b of the larger diameter sprocket 1, thereby being made difficult to engage with the chain 3.

In addition, the first and second teeth 11 and 12 are not made not-easy-engageable because the chain 3 is intended to reliably engage with the first tooth 11,and the spaces 3a and 3b between the link plates of the chain 3 in engagement with the tooth 11 are intended to reliably engage with the second tooth 12, whereby the first and second teeth 11 and 12 are preferred to be easily engageable with the chain 3.

Also, a length between the adjacent teeth and on the pitch circle of the respective sprockets 1 and 2 is made larger by a predetermined length than an outer diameter of a roller at the chain 3. Accordingly, the distance L between the centers 01 and 02 is smaller than an integer multiple of chain pitch. In other words, when the sprockets 1 and 2 are mounted on the rear hub, a driving force by pedaling is transmitted from the chain 3 to the sprocket 1 or 2, whereby when the chain 3 is shifted from the sprocket 2 to that 1, the roller at the smaller diameter sprocket 2 side abuts against the rear surface of a tooth ahead of the roller in the driving rotation direction of the sprocket 2, and the roller moving toward the larger diameter sprocket 1 and caught by the tooth thereof abuts against the front surface of the first tooth 11 in the driving rotation direction of the sprocket 1, whereby when both the sprockets 1 and 2 are aligned, the distance L is somewhat smaller than an integer multiple of chain pitch. In addition, when the length between the adjacent teeth on the pitch circle corresponds to the outer diameter of the roller, the distance L is made equal to an integer multiple of chain pitch.

When the chain 3 is shifted from the smaller diameter sprocket 2 to the larger diameter sprocket 1 by a rear derailleur, the engagement of the chain 3 with the sprockets 1 and 2 will be described in accordance with Figs.1 through 3.

In Figs.1 and 3, when the chain 3 in engagement with the smaller diameter sprocket 2 is displaced by the rear derailleur to the larger diameter sprocket 1, the chain 3 in part positioned ahead in the driving rotation direction ( in the direction of the arrow X ) remains at the smaller diameter sprocket 2 and the same positioned at the rear derailleur operation side reaches the lateral side of sprocket 1 to thereby be inclined and biased toward the sprocket 1 as shown in Figs.2 and 3.

Also, the chain guide portion 4 is provided on the traveling path of the chain 3 when traveling between the centers 01 and 02 , so that the chain 3 travels at a predetermined amount toward the outside surface of the sprocket 1, thereby reliably engaging with the first tooth 11 thereof.

Since the chain guide portion 4 is recessed to an extent that the inner link plate 32 of chain 3 at the larger diameter sprocket 1 side does not ride on the first tooth 11, when the inner link plate 32 is positioned corresponding thereto, the outer link plate 31 abuts against the termination 4d of chain gudie portion 4 as shown in Fig.3 and the chain 3 is restricted from moving toward the outside surface, thereby preventing the inner link plate 32 from riding on the first tooth 11.

Also, the chain 3 can inevitably engage with the first or second tooth 11 or 12 because all other teeth are not-easy-engageable , thereby smoothly shifting the chain 3.

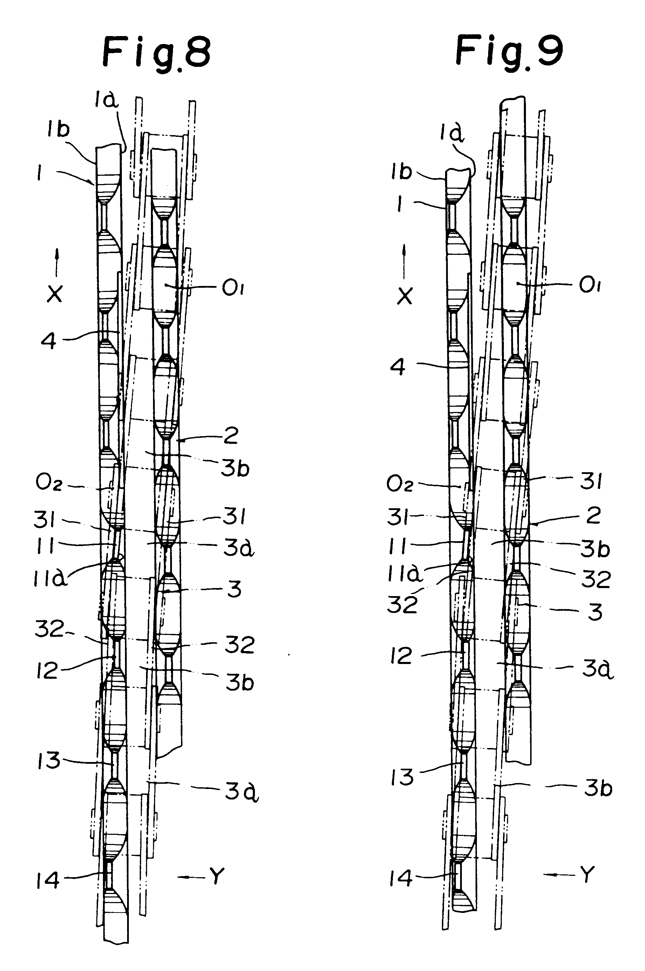

Alternatively, as shown in a second embodiment of the invention shown in Figs.8 and 9, a third tooth 13 positioned behind the second tooth 12 in the driving rotation direction of the sprocket 1 may not be a not-easy-engageable tooth but be a speed change tooth engageble with the chain 3.

In Figs.8 and 9, all the teeth 14 except for the first through third teeth 11 through 12 at the larger diameter sprocket 1 are deviated axially outwardly thereof, that is, reversely to the sprocket 2, so as to be difficult to engageable with the chain 3, the first through third teeth 11 through 13 being displaced axially inwardly of the sprocket 1, that is, toward the sprocket 2, thereby being easily engageable with the chain 3. Moreover, the first tooth 11 is provided with a chain guide surface 11a for guiding therethrough the chain 3 reversely to the sprocket 2, the second tooth 12 is displaced reversely thereto with respect to the first tooth 11, and the third tooth 13 with respect to the second tooth 12 , so that the second tooth 12 is easily engageable with the chain 3 subsequently to the first tooth 11, the third tooth 13 being not difficult but not-easier to engage with the chain 3 than the second tooth 12.

In the above-mentioned construction, the chain guide surface 11a, as shown in Figs.8 and 9, is inclined rearwardly in the driving rotation direction of the larger diameter sprocket 1 and reversely to the smaller diameter sprocket 2 with respect to the center line of thickness of the sprocket 1. Alternatively, the chain guide surface 11a may be formed in such a manner that the first tooth 11 is parallel to the aforesaid center line and cutout at a portion rearward in the driving rotation direction of the sprocket 1 and facing the smaller diameter sprocket 2, for example, at a portion from the bottom to the crest of the tooth.

When the chain 3 is shifted from the smaller diameter sprocket 2 to the largest diameter one 1, the space 3a between the outer line plates 31 firstly engages with the first tooth 11, whereby the first tooth 11 is made most easily engageable with the chain 3. The second tooth 12 is made easy to engage with the chain 3, whereby a narrow space 3b between the inner link plates 32 behind the wide space 3a is easily engageable with the second tooth 12, and , when the inner link plates are biased at the position corresponding to the first tooth 11 and the first tooth 11 cannot catch the space 3a, the second tooth 12 is adapted to catch the space 3a. Also, when the second tooth 12 catches the wide space 3a, the narrow space 3b adjacent thereto is adapted to be easy to engage with the third tooth 13 made easily engageable with the chain 3.

In addition, the reason for reducing displacement of the third tooth 13 toward the smaller diameter sprocket 2 more than that of the second tooth 12 is that,when the inner link plates are biased at the position corresponding to the second tooth 12 so that the first and second teeth 11 and 12 cannot catch the wide space 3a, the outer link plate is prevented from riding on the third tooth 13.

In the above-mentioned construction , in a case where the chain 3 is shifted from the smaller diameter sprocket 2 to the larger diameter one 1, when the first tooth 11 corresponds to the outer link plate 31, a distance between the centers 01 and 02 of interval between the two adjacent teeth at the sprockets 1 and 2 is substantially an integer multiple of chain pitch so that the roller of chain 3 is biased to be positioned corresponding to the center 02 between the adjacent teeth at the sprocket 1,and the first tooth 11 is easily engageable with the chain 3, resulting in that the wide space 3a between the outer link plates 31 adjacent to the roller smoothly engages with the first tooth 11.

In this case, since the second tooth 12 behind the first tooth 11 in the driving rotation direction sprocket 1 also is easily engageable, the space 3b between the inner link plates 32 behind the outer link plate 31 in the traveling direction and adjacent thereto smoothly engages with the second tooth 12, thereby quickly shifting the chain 3 to the sprocket 1. Also, an outer link plate 31 behind the inner link plate 32 in the traveling direction can reliably engage with the third tooth 13 behind the second tooth 12. In other words, the third tooth 13 is easily engageable with the chain 3 and the first tooth 11 is provided with the chain guide surface 11a , so that the chain 3, when shifted from the sprocket 2 to that 1, can be displaced reversely to the sprocket 2 more than when the guide surface 11a is not provided, and correspondingly the second tooth 12 is displaced reversely to the sprocket 2 and the third tooth 13 with respect to the second tooth 12, thereby reliably preventing the outer link plate 31 from riding on the third tooth 13. Also, the chain 3 can smoothly engage with the third tooth 13 without riding thereon and eliminate sounds generated when engaging with the chain 3.

On the other hand, when the inner link plate 32 corresponds to the first tooth 11 when the chain 3 is shifted, the space 3b between the inner link plates 32 does not engage with the first tooth 11, but a space 3a between the next outer link plates 31 positioned behind the inner link plates 32 in the traveling direction ( the direction of the arrow Y ) engages with the second tooth 12. In this case, the next inner link plates 32 positioned behind the outer link plates 31 in the traveling direction correspond to the third tooth 13. Since the third tooth 13 is the speed change tooth, the space 3b between the inner link plates 32 engages with the third tooth 13, whereby the chain 3 is quickly shifted to the larger diameter sprocket 1.

Alternatively, the multistage sprocket assembly may comprise three sprockets or more and may be used for a crank means at the bicycle.

As seen from the above, the present invention assembles at least one larger diameter sprocket 1 and at least one smaller diameter sprocket 2 in the relation that the center 02 between a pair of adjacent teeth at the sprocket 1 is positioned on the tangent extending from the center 01 between a pair of adjacent teeth at the sprocket 2, makes the distance between the ceters 01 and 02 substantially an integer multiple of chain pitch, and provides the chain guide portion 4 allowing the chain 3 to deviate axially outwardly of the sprocket 1 at the inside surface thereof facing the sprocket 2 and corrsponding to the traveling path of the chain 3 when traveling between the centers 01 and 02, whereby, when the chain 3 is shifted from the smaller diameter sprocket 2 to the larger diameter one 1, the chain can smoothly engage with the sprocket 1 and the chain guide portion 4 can displace by the predetermined amount axially outwardly of the sprocket 1. Hence, the space between the outer link plates 31 can reliably engage with the first tooth behind the center 02, and also the inner link plates 32, even when corresponding to the first tooth 11 but not engaging therewith, never rides on the first tooth 11, thereby reliably engaging the outer link plates 31 behind the inner link plate 32 in the traveling direction. Also, the inner link plates 32 behind the outer link plates 31 in the traveling direction can reliably engage with the third tooth 13 positioned behind the second tooth 12 in the driving rotation direction of the sprocket 1.

Although several embodiments have been described, they are merely exemplary of the invention and not to be constructed as limiting , the invention being defined solely by the appended claims.

## Claims

1. A multistage sprocket assembly for a bicycle comprising at least one larger diameter sprocket (1), at least one smaller diameter sprocket (2) and a drive chain (3), and the or each larger diameter sprocket (1) having at its outer periphery a given number of teeth which are spaced at intervals corresponding to the pitch of the chain (3) and the or each smaller diameter sprocket (2) having at its outer periphery teeth which are smaller in number than the teeth of said larger diameter sprocket (1) and are spaced at intervals corresponding to the pitch of the chain (3), said sprockets (1) and (2) being assembled so that the centre (0₂) between a pair of adjacent teeth of said larger diameter sprocket (1) is positioned on a tangent extending from the centre (0₁) between a pair of adjacent teeth of said smaller diameter sprocket, said tangent extending along the path of travel of the driving chain (3) in engagement with said smaller diameter sprocket (2) when said chain (3) shifted therefrom into engagement with said larger diameter sprocket (1), the distance between said centres (0₁, 0₂) being at least substantially an integer multiple of the chain pitch, characterised in that said larger diameter sprocket (1) is provided with a chain guide surface (4) on the inside surface of the sprocket (1) facing the smaller diameter sprocket (2) and at a position on said larger diameter sprocket (1) which corresponds to the path of travel between said centres (0₁, 0₂) between adjacent teeth of the sprockets where the chain makes contact with the larger diameter sprocket (1), said chain guide surface (4) having such a shape and size as to receive an entire link plate of a link of said chain and to cause the link to be biased towards the larger diameter sprocket (1) as the chain leaves the smaller diameter sprocket and starts to engage with a tooth of the larger diameter sprocket (1), said tooth being the tooth behind said centre (0₂) between adjacent teeth of the larger diameter sprocket in the direction of drive rotation.

2. A multistage sprocket assembly for a bicycle according to claim 1, wherein at least two teeth among a large number of teeth (11) at said larger diameter sprocket and including a first tooth (11) positioned behind the center between said pair of adjacent teeth in the driving rotation direction of said larger diameter sprocket are speed-change teeth engageable with said chain when shifted from said smaller diameter sprocket to said larger diameter sprocket, the residual teeth being substantially non-engageable teeth difficult to engage with said chain.

3. A multistage sprocket assembly for a bicycle according to claim 2, wherein said first tooth (11), a second tooth (12) adjacent thereto and behind said first tooth in the driving rotation direction of said sprocket (1), and a third tooth adjacent to said second tooth and positioned behind said second tooth in the driving rotation direction of said sprocket, are formed as speed change teeth respectively, the residual teeth being all substantially non-engageable teeth respectively.

4. A multistage sprocket assembly for a bicycle according to claim 3, wherein said first tooth is provided with a chain guide surface which can guide, reversely to said smaller diameter sprocket (2) to said larger diameter sprocket (1), said second tooth being displaced with respect to said first tooth reversely to said smaller diameter sprocket (2), and said third tooth being displaced with respect to said second tooth reversely to the same.

5. A multistage sprocket assembly for a bicycle according to claim 1, wherein said chain guide portion (4) is recessed at the inside surface of said larger diameter sprocket (1) facing said smaller diameter sprocket (2), so that said recess is deep at a side of the center between said adjacent teeth at said larger diameter sprocket to an extent that an outside link plate of said chain (3) does not ride on a tooth positioned behind said centre in the driving rotation direction of said sprocket.

6. A multistage sprocket assembly for bicycle according to claim 1, wherein said guide portion (4) is formed of a cutout.

## Patentansprüche

1. Mehrstufige Kettenradanordnung für ein Fahrrad, enthaltend mindestens ein Kettenrad (1) mit einem größeren Durchmesser, mindestens ein Kettenrad (2) mit einem kleineren Durchmesser und eine Antriebskette (3), wobei das Kettenrad (1) oder jedes der Kettenräder (1) mit einem größeren Durchmesser an seinem Außenumfang eine gegebene Anzahl an Zähnen aufweist, die in Abständen voneinander angeordnet sind, die dem Lochabstand der Kette (3) entsprechen, sowie das Kettenrad (2) oder jedes der Kettenräder (2) mit einem kleineren Durchmesser an seinem Außenumfang Zähne aufweist, deren Anzahl kleiner als die Anzahl der Zähne des Kettenrads (1) mit einem größeren Durchmesser ist und die in Abständen voneinander angeordnet sind, die dem Lochabstand der Kette (3) entsprechen, und wobei die Kettenräder (1) und (2) derart angeordnet sind, daß die Mitte (0₂) zwischen einem Paar benachbarter Zähne des Kettenrads (1) mit einem größeren Durchmesser sich auf einer Tangente befindet, die sich von der Mitte (0₁) zwischen einem Paar benachbarter Zähne des Kettenrads mit einem kleineren Durchmesser aus entlang des Laufwegs der Antriebskette (3) im Eingriff mit dem Kettenrad (2) mit einem kleineren Durchmesser erstreckt, wenn die Kette (3) von dort in Eingriff mit dem Kettenrad (1) mit einem größeren Durchmesser versetzt wird, wobei die Entfernung zwischen den genannten Mitten (0₁, 0₂) mindestens im wesentlichen ein ganzzahliges Vielfaches des Lochabstandes der Kette ist, dadurch gekennzeichnet, daß das genannte Kettenrad (1) mit einem größeren Durchmesser an seiner Innenoberfläche mit einer Kettenführungsoberfläche (4) versehen ist, die dem Kettenrad (2) mit einem kleineren Durchmesser zugewandt ist, und auf dem Kettenrad (1) mit einem größeren Durchmesser an einer Position, die im Laufweg zwischen den genannten Mitten (0₁, 0₂) zwischen benachbarten Zähnen der Kettenräder, wo die Kette mit dem Kettenrad (1) mit einem größeren Durchmesser in Kontakt kommt, wobei die Kettenführungsoberfläche (4) eine derartige Gestalt und Größe aufweist, daß sie eine ganze Gliedplatte eines Gliedes der Kette aufnimmt und bewirkt, daß das Glied in Richtung auf das Kettenrad (1) mit einem größeren Durchmesser vorgespannt wird, wenn die Kette das Kettenrad mit einem kleineren Durchmesser verläßt und beginnt, mit einem Zahn des Kettenrads (1) mit einem größeren Durchmesser in Eingriff zu kommen, wobei dieser Zahn der Zahn hinter der Mitte (0₂) zwischen benachbarten Zähnen des Kettenrads mit einem größeren Durchmesser in der Antriebsdrehrichtung ist.

2. Mehrstufige Kettenradanordnung für ein Fahrrad nach Anspruch 1, worin mindestens zwei Zähne einer großen Anzahl von Zähnen (11) auf dem Kettenrad mit einem größeren Durchmesser, einschließlich eines ersten Zahns (11), der hinter der Mitte zwischen dem genannten Paar benachbarter Zähne in der Antriebsdrehrichtung des Kettenrads mit einem größeren Durchmesser angeordnet ist, Gangwechselzähne sind, die mit der Kette in Eingriff gebracht werden können, wenn sie von einem Kettenrad mit einem kleineren Durchmesser auf das Kettenrad mit einem größeren Durchmesser versetzt werden, wobei die restlichen Zähne solche sind, die mit der Kette schwer in Eingriff bringbar sind.

3. Mehrstufige Kettenradanordnung für ein Fahrrad nach Anspruch 2, worin der genannte erste Zahn (11), ein hierzu benachbarter und in der Antriebsdrehrichtung des Kettenrads (1) hinter dem ersten Zahn (11) angeordneter zweiter Zahn (12) und ein dritter Zahn, der dem zweiten Zahn benachbart ist und in der Antriebsdrehrichtung des Kettenrads hinter dem zweiten Zahn angeordnet ist, jeweils als Gangwechselzähne ausgebildet sind und die restlichen Zähne alle Zähne sind, die im wesentlichen jeweils nicht in Eingriff bringbar sind.

4. Mehrstufige Kettenradanordnung für ein Fahrrad gemäß Anspruch 3, worin der genannte erste Zahn mit einer Kettenführungsoberfläche versehen ist, die umgekehrt zu dem Kettenrad (2) mit einem kleineren Durchmesser zu dem Kettenrad (1) mit einem größeren Durchmesser führen kann, und worin der genannte zweite Zahn bezüglich des ersten Zahns umgekehrt zu dem Kettenrad (2) mit einem kleineren Durchmesser versetzt ist sowie der genannte dritte Zahn bezüglich des zweiten Zahns umgekehrt zu diesem versetzt ist.

5. Mehrstufige Kettenradanordnung für ein Fahrrad nach Anspruch 1, worin der Kettenführungsabschnitt (4) an der Innenoberfläche des Kettenrads (1) mit einem größeren Durchmesser, die dem Kettenrad (2) mit einem kleineren Durchmesser zugewandt ist, als Ausnehmung ausgebildet ist, so daß diese Ausnehmung an einer Seite der Mitte zwischen den genannten benachbarten Zähnen an dem Kettenrad mit einem größeren Durchmesser bis zu einem solchen Ausmaß tief ausgebildet ist, daß eine Gelenkplatte an der Außenseite der Kette (3) nicht auf einem Zahn aufsitzt, der hinter der genannten Mitte in der Antriebsdrehrichtung des genannten Kettenrads angeordnet ist.

6. Mehrstufige Kettenradanordnung für ein Fahrrad nach Anspruch 1, worin der Führungsabschnitt (4) aus einem Auschnitt gebildet ist.

## Revendications

1. Ensemble multi-étagé de pignons à chaîne pour bicyclette, comprenant au moins un pignon de plus grand diamètre (1),au moins un pignon de plus petit diamètre (2) et une chaîne d'entraînement (3), le ou chaque pignon de plus grand diamètre (1) ayant à sa périphérie extérieure un nombre donné de dents qui sont espacées à intervalles correspondant au pas de la chaîne (3) et le ou chaque pignon de plus petit diamètre (2) ayant à sa périphérie extérieure un nombre de dents plus petit que celui des dents dudit pignon de plus grand diamètre (1) et les dents du plus petit pignon étant espacées à intervalles correspondant au pas de la chaîne (3), lesdits pignons (1) et (2) étant assemblés de sorte que le centre (0₂) entre deux dents adjacentes dudit pignon de plus grand diamètre (1) se trouve sur une tangente partant du centre (0₁) entre deux dents adjacentes dudit pignon de plus petit diamètre, ladite tangente s'étendant le long du chemin de déplacement de la chaîne d'entraînement (3) en prise avec ledit pignon de plus petit diamètre (2) lorsque ladite chaîne (3) est transférée à partir de ce pignon et amenée en prise avec ledit pignon de plus grand diamètre (1), la distance entre lesdits centres (0₁, 0₂) étant au moins sensiblement un multiple entier du pas de la chaîne,caractérisé en ce que ledit pignon de plus grand diamètre (1) présente une surface de guidage de chaîne (4) sur la surface intérieure du pignon (1) en regard du pignon de plus petit diamètre (2) et à une position sur ledit pignon de plus grand diamètre (1) qui correspond au chemin de déplacement entre lesdits centres (0₁, 0₂) entre dents adjacentes des pignons et à laquelle la chaîne vient en contact avec le pignon de plus grand diamètre (1), ladite surface de guidage de chaîne (4) ayant une forme et une dimension telles qu'elle reçoit une plaquette de liaison complète d'un maillon de ladite chaîne et provoque une sollicitation du maillon vers le pignon de plus grand diamètre (1) lorsque la chaîne quitte le pignon de plus petit diamètre et commence à venir en prise avec une dent du pignon de plus grand diamètre (1), la dite dent étant la dent située à l'arrière dudit centre (0₂) entre dents adjacentes du pignon de plus grand diamètre dans le sens de la rotation d'entraînement.

2. Ensemble multi-étagé de pignons à chaîne pour bicyclette suivant la revendication 1, dans lequel au moins deux dents, parmi un grand nombre de dents (11) dudit pignon de plus grand diamètre et incluant une première dent (11) située à l'arrière du centre entre ladite paire de dents adjacentes dans le sens de rotation d'entraînement dudit pignon de plus grand diamètre, sont des dents de changement de vitesse qui peuvent venir en prise avec ladite chaîne lors du transfert de celle-ci dudit pignon de plus petit diamètre audit pignon de plus grand diamètre, les dents restantes étant des dents sensiblement non enclenchables qui viennent difficilement en prise avec ladite chaîne.

3. Ensemble multi-étagé de pignons à chaîne pour bicyclette suivant la revendication 2, dans lequel ladite première dent (11), une deuxième dent (12) adjacente à la première dent et située à l'arrière de celle-ci dans le sens de rotation d' entraînement dudit pignon (1), et une troisième dent adjacente à ladite deuxième dent et située à l'arrière de ladite deuxième dent dans le sens de rotation d'entraînement dudit pignon, sont configurées comme des dents de changement de vitesse respectivement, les dents restantes étant toutes des dents sensiblement non enclenchables respectivement.

4. Ensemble multi-étagé de pignons à chaîne pour bicyclette suivant la revendication 3, dans lequel ladite première dent présente une surface de guidage de chaîne qui peut guider, à l'opposé du pignon de plus petit diamètre (2), vers ledit pignon de plus grand diamètre (1), ladite deuxième dent étant décalée par rapport à la dite première dent à l'opposé dudit pignon de plus petit diamètre (2), et ladite troisième dent étant décalée par rapport à ladite deuxième dent à l'opposé dudit pignon de plus petit diamètre.

5. Ensemble multi-étagé de pignons à chaîne pour bicyclette suivant la revendication 1, dans lequel ladite partie de guidage de chaîne (4) est formée par un lamage de la surface intérieure dudit pignon de plus grand diamètre (1) en regard dudit pignon de plus petit diamètre (2) de sorte que ledit lamage présente une profondeur, d'un côté du centre entre lesdites dents adjacentes dudit pignon de plus grand diamètre, d'une valeur telle qu'une plaquette de liaison extérieure de ladite chaîne (3) ne chevauche pas une dent située à l'arrière dudit centre dans le sens de rotation d'entraînement du dit pignon.

6. Ensemble multi-étagé de pignons à chaîne pour bicyclette suivant la revendication 1, dans lequel ladite partie de guidage est formée par une découpe.
